(19) Europäisches Patentamt
European Patent Office
Office européen des brevets

(11) EP 4 332 175 B1

(12) **EUROPEAN PATENT SPECIFICATION**

(45) Date of publication and mention of the grant of the patent:
**21.05.2025 Bulletin 2025/21**

(21) Application number: **22193670.1**

(22) Date of filing: **02.09.2022**

(51) International Patent Classification (IPC):
***C09B 67/22*** *(2006.01)* ***D06L 4/621*** *(2017.01)*
***D06L 4/664*** *(2017.01)*

(52) Cooperative Patent Classification (CPC):
**C09B 67/0034; D06L 4/621; D06L 4/664**

(54) **OPTICAL BRIGHTENING AGENT COMPOSITION**

OPTISCHE AUFHELLERZUSAMMENSETZUNG

COMPOSITION D'AGENT D'ÉCLAIRCISSEMENT OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.03.2024 Bulletin 2024/10**

(73) Proprietor: **CHT Germany GmbH**
**72072 Tübingen (DE)**

(72) Inventors:
- **BACHUS, Herbert**
  **72076 Tübingen (DE)**
- **FLATAU, Mike**
  **72072 Tübingen (DE)**
- **REDLING, Erwin**
  **79650 Schopfheim (DE)**
- **WERZ, Patrick**
  **72108 Rottenburg (DE)**
- **WITZEL-WILHELM, Heike**
  **72072 Tübingen (DE)**

(74) Representative: **Maiwald GmbH**
**Elisenhof**
**Elisenstraße 3**
**80335 München (DE)**

(56) References cited:
**US-A- 4 339 238** **US-A- 5 051 111**
**US-A1- 2005 022 320**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 332 175 B1

## Description

## Technical Field

The present invention relates to a composition comprising optical brightening agents, a method of preparing said composition, a method using said composition and a fabric treated with said composition.

## Background of the Invention

Optical brightening agents (also abbreviated as OBAs) are well known and typically are organic molecules having a conjugated $\pi$-electron system which renders the molecule capable of exhibiting fluorescence, i.e. the molecule is capable of emitting radiation in the visible spectrum when it is irradiated with light in the ultraviolet spectrum. In practice, an OBA applied to a white surface is perceived by the human eye as having the effect of intensifying the impression of white colour such that the white surface could be described as appearing "whiter" than "simply" white. A material showing this effect is commonly perceived as having a particularly clean and tidy appearance (or, in more proverbial terms, an "immaculate" appearance). For this reason, OBAs are widely used to improve the whiteness and brightness of textile products and other material such as cellulose-based materials, like paper, paperboard and cotton.

OBAs can be applied to a textile product such as garments, as a finishing treatment at the final stage of manufacturing said textile product or during a routine process of washing said textile product after it has been used.

In a large-scale manufacturing process, it is common to apply OBAs to a textile product in a continuous or discontinuous process. For instance, a solution of the OBAs are sprayed onto the textile product and/or the textile product is passed through a solution of the OBAs and optionally additional auxiliaries. This continuous application of the OBAs to a textile product can be carried out in a roll-to-roll process (also referred to as padding process), i.e. the untreated textile product is supplied in a wound state on a roll, unwound and sprayed with the a solution of the OBAs and/or passed through a solution of the OBAs, and wound again on a roll. For such a continuous process of applying OBAs to a textile product, it is usually required to supply the OBAs in the form of a solution having a sufficiently high concentration of OBAs.

Bearing in mind that volatile organic solvents are to be avoided in such a finishing process, the OBAs should have sufficiently high solubility in water. On the other hand, in order to maintain the whiteness and brightness imparted to a textile product by such a finishing process even when the textile product is washed after it has been used, the OBAs should not be removed from the textile product during a washing process. Therefore, in order to achieve that at least a portion of the OBAs remains on the or within the textile product during washing, the affinity of the OBAs to cotton needs to be high. This behaviour is referred to as washing fastness.

As a result, a convenient finishing process that can be conducted on a large scale requires solubility of OBAs in water and a good affinity of the OBAs to cotton, whereas the long-term whiteness and brightness effect to be imparted to the textile product requires a high affinity of OBAs to cotton.

Various OBAs have sulfonic acid groups ($-SO_3X$, wherein X = H, Na or K, for instance) in their molecular structure. These acidic groups enable a sufficient solubility in aqueous media having a basic pH, i.e. higher than 7. The presence of sulfonic acid groups in the molecular structure reduces the affinity to cotton and thus results in a lower wash fastness. Therefore, an optical brightening agent containing two sulfonic acid groups in its molecular structure is commonly regarded as being advantageous over an optical brightening agent containing four (or more) sulfonic acid groups in its molecular structure. That is, from the viewpoint of wash fastness, the use of CI 134 (CAS number 3426-43-5), which has two sulfonic acid groups in its molecular structure, as an OBA is considered as being advantageous in numerous textile treatment methods. Yet, in view of the solubility of this OBA, this OBA is not suitable for being used in any type of application, but OBAs having more sulfonic acid groups in its molecular structure could be preferably used.

However, the finishing of a textile product typically involves the application of several types of agents. For instance, suitable softening agents are typically applied in order to impart a pleasant, soft feel ("hand") to the textile product. Optical brightening agents containing sulfonic acid groups in their molecular structure are present in anionic form in an aqueous solution and tend to form precipitates with cationic compounds. Therefore, it is usually required that softening agents to be applied together with optical brightening agents are not cationic in order to prevent the formation of precipitates. For this reason, pseudo-cationic and silicone-based softening agents, such as so-called esterquats, are commonly used as such softening agents. In order to increase throughput and thus efficiency of the finishing process, a plurality of finishing agents is typically applied using a single application liquid. Since typical esterquats have limited solubility in aqueous media having a basic pH and typical OBAs have limited solubility in aqueous media having an acidic pH, it is a delicate task to suitably adjust the pH such that softening agents and OBAs can be applied using a single application liquid.

Furthermore, it can be desirable to treat a textile product with a resin finish (i.e. oligomeric or polymeric agents are applied) in order to impart resistance to creasing or wrinkling. This applies in particular to textile products made from cellulosic fibers such as cotton. Such properties are also referred to as "non-iron properties" (or "non-iron finishing")

because ironing of the textile product after washing and drying becomes unnecessary. The oligomeric or polymeric agents used for this purpose are also referred to as "non-iron finishing agents". In essence, these agents act by reducing or completely preventing the mobility of cellulose chain molecules within and between the fibers of a yarn of the textile product, in particular in the presence of water or moisture. This is achieved by crosslinking of cellulose chain molecules within and between the fibers of a yarn of the textile product. The crosslinking of the oligomeric or polymeric agents on and within the fibers of the textile product is accomplished by inducing reactive chemical groups to form intermolecular chemical bonds, typically under the impact of heat and catalytically active co-agents such as titanium oxide and/or magnesium salts, for instance magnesium chloride in combination with an acid such as acetic acid, formic acid, citric acid and the corresponding hydrated forms, hydrochloric acid, sulfuric acid, sulfurous acid, phosphoric acid, phosphorous acid maleic acid, maleic acid anhydride etc.. As an exemplary non-iron finishing agent, dimethylol ethylene urea (DMEU) and dimethylol dihydroxyethylene urea (DMDHEU) can be mentioned. This represents common knowledge of the person skilled in the art of textile technology and is summarized in numerous publications such as C. K. Poon et al., Cellulose Chem. Technol., 50 (7-8), 2016, pages 889-894 and Y. Hassen et al., J. Textile Sci. & Fashion Tec. 9(3), 2021.

In order to enable a simple and economically advantageous treatment process, it is generally desirable to effect the treatment of a textile product with an OBA and non-ironing finishing agents in a single step, i.e. by applying a single liquid containing both the OBA and the non-ironing finishing agents. However, magnesium salts can affect solubility of OBAs. This implies that the formulation of OBAs, softening agents and non-iron finishing agents can be particularly challenging.

EP 0 032 483 A2 (Ciba-Geigy AG) relates to aqueous, storage-stable formulations of optical brightening agents containing a stilbene substructure bearing sulfo groups, their use for the optical brightening of natural and synthetic fiber materials such as paper, and a brightening bath containing such formulations.

EP 0 323 399 A1 (Ciba-Geigy AG) relates to an aqueous dispersion of optical brightening agents, its preparation and use for the optical brightening of polyester/cellulosic fiber materials.

Despite the efforts summarized in the prior art, the need persists for providing formulations of optical brightening agents in which the respective optical brightening agents are contained in a sufficiently high concentration without compromising stability of the formulation during storage. Likewise, the need persists for providing formulations containing optical brightening agents and further treatment agents such as softening agents and/or non-iron finishing agents. This applies to formulations having a high concentration which are typically used for storage and from which diluted formulations ready-for-use are prepared as well as to the diluted, ready-for-use formulations.

Therefore, it is an object of the present invention to provide a composition comprising at least one optical brightening agents in a high concentration that is sufficiently high for the intended use, which composition can be stored and/or used over a long period. In other words, the composition to be provided should contain at least one optical brightening agent in such a concentration that the composition is ready for being applied to a textile product and imparts a whitening and brightening effect to the treated textile product, which whitening and brightening effect persists after repeated washing, or the composition is concentrated and suitable for being stored over an extended period of time and for preparing a ready-for-use composition by diluting.

## Brief Description of the Invention

Surprisingly, it was found that the drawbacks inherent in the prior art can be overcome and the aforementioned object can be achieved by providing a composition comprising
a compound A of formula (I)

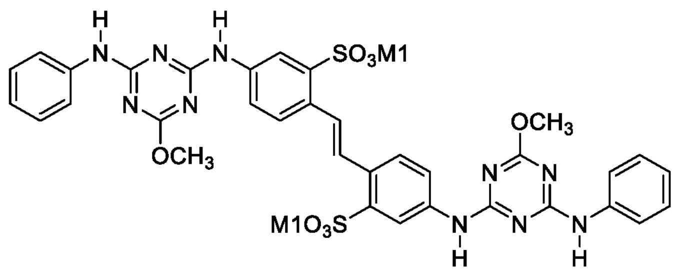

Formula (I)

wherein M1 is independently selected from H, Li, Na, K, $NH_4^+$, $R^a_4N^+$, $R^a_{(4-m)}NH_m$, in which m is 1, 2, or 3 and Ra is independently selected from alkyl groups having 1-4 carbon atoms and hydroxyethyl groups;

a compound B of formula (II)

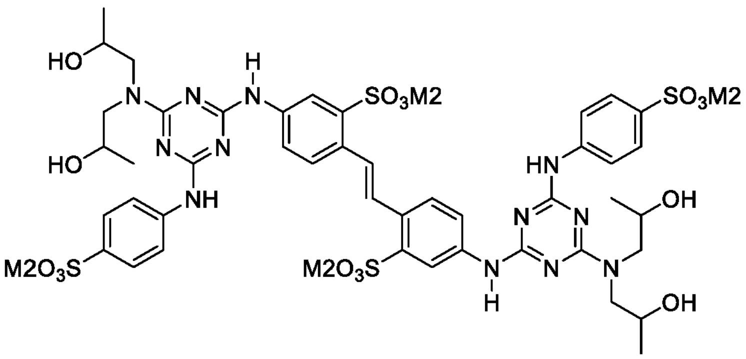

Formula (II)

wherein M2 is independently selected from H, Li, Na, K, $NH_4^+$, $R^a_4N^+$, $R^a_{(4-m)}NH_m$, in which m is 1, 2, or 3 and Ra is an alkyl group having 1-4 carbon atoms and hydroxyethyl groups;
and water,
wherein
the weight ratio compound A : compound B is in the range of 0.1:1 to 3:1, and the total weight of compound A and compound B relative to the total weight of the composition is 0.1 to 50 %.

Thus, the invention described in the following was completed.

In a first aspect, the present invention is directed to the provision of a composition comprising a compound of formula (I), a compound of formula (II) and water.

In a second aspect, the present invention is directed to the provision of a method of preparing said composition according to the first aspect of the invention.

In a third aspect, the present invention is directed to the provision of a method of applying said composition according to the first aspect of the invention to a textile product.

In a fourth aspect, the present invention is directed to the provision of a textile product obtainable from the method according to the third aspect of the invention.

The invention is described in detail in the following.

## Detailed Description of the Invention

In particular, the present invention encompasses the following embodiments according to the first aspect of the invention.

[1.1] Composition comprising
a compound A of formula (I)

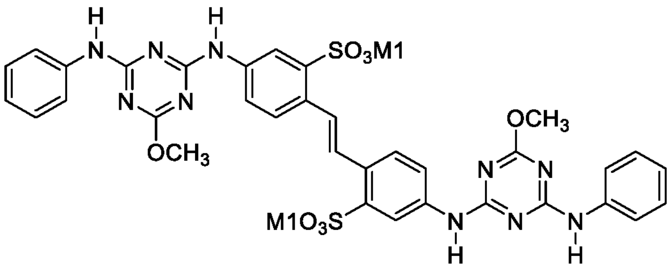

Formula (I)

wherein M1 is independently selected from H, Li, Na, K, $NH_4^+$, $R^a_aN^+$, $R^a_{(4-m)}NH_m$, in which m is 1, 2, or 3 and Ra is independently selected from alkyl groups having 1-4 carbon atoms and hydroxyethyl groups;

a compound B of formula (II)

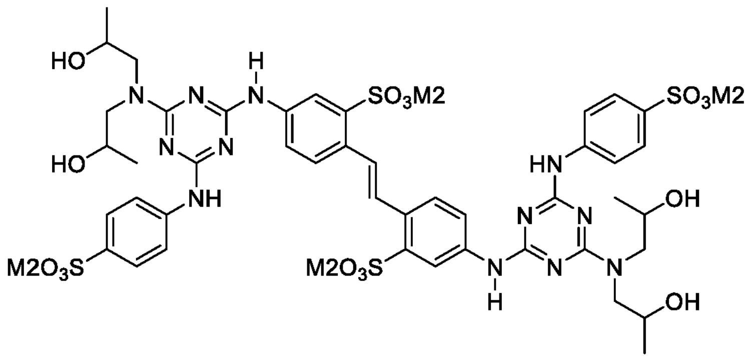

Formula (II)

wherein M2 is independently selected from H, Li, Na, K, $NH_4^+$, $R^a{}_aN^+$, $R^a{}_{(4-m)}NH_m$, in which m is 1, 2, or 3 and Ra is an alkyl group having 1-4 carbon atoms and hydroxyethyl groups;
and water,
wherein
the weight ratio compound A : compound B is in the range of 0.10 to 3.00, and the total weight of compound A and compound B relative to the total weight of the composition is 0.10 to 50 %.

[1.2] Composition as defined under item [1.1], wherein the weight ratio compound A : compound B is in the range of 0.20 to 2.50.

[1.3] Composition as defined under item [1.1], wherein the weight ratio compound A : compound B is in the range of 0.25 to 2.20.

[1.4] Composition as defined under item [1.1], wherein the weight ratio compound A : compound B is in the range of 0.30 to 1.00.

[1.5] Composition as defined under item [1.1], wherein the weight ratio compound A : compound B is in the range of 0.30 to 0.80.

[1.6] Composition as defined under item [1.1], wherein the weight ratio compound A : compound B is in the range of 0.30 to 0.50.

[1.7] Composition as defined under item [1.1], wherein the weight ratio compound A : compound B is in the range of 1.01 to 2.50.

[1.8] Composition as defined under item [1.1], wherein the weight ratio compound A : compound B is in the range of 1.50 to 2.30.

[1.9] Composition as defined under item [1.1], wherein the weight ratio compound A : compound B is in the range of 1.70 to 2.10.

[1.10] Composition as defined under any one of items [1.7] to [1.9], wherein the composition contains alkaline earth metal ions in an amount of less than 1 g/l.

[1.11] Composition as defined under any one of items [1.7] to [1.9], wherein the composition contains alkaline earth metal ions in an amount of less than 0.5 g/l.

[1.12] Composition as defined under any one of items [1.7] to [1.9], wherein the composition contains alkaline earth metal ions in an amount of less than 0.2 g/l.

[1.13] Composition as defined under any one of items [1.10] to [1.12], wherein the alkaline earth metal ions are selected from calcium ions, magnesium ions and a combination of these.

[1.14] Composition as defined under any one of items [1.1] to [1.13], wherein compound A and compound B are

present in dissolved state.

[1.15] Composition as defined under any one of items [1.1] to [1.14], wherein the total weight of compound A and compound B relative to the total weight of the composition is 10 to 40 %.

[1.16] Composition as defined under any one of items [1.1] to [1.14], wherein the total weight of compound A and compound B relative to the total weight of the composition is 0.10 to 1.0 %.

[1.17] Composition as defined under any one of items [1.1] to [1.14], wherein the total weight of compound A and compound B relative to the total weight of the composition is 0.15 to 0.8 %.

[1.18] Composition as defined under any one of items [1.1] to [1.17], wherein the composition contains one or more solubilizing agents in an amount of 0.70-1.50 parts by weight relative to 1.00 part by weight of compound A and compound B.

[1.19] Composition as defined under any one of items [1.1] to [1.17], wherein the composition contains one or more solubilizing agents in an amount of 0.80-1.40 parts by weight relative to 1.00 part by weight of compound A and compound B.

[1.20] Composition as defined under any one of items [1.1] to [1.19], wherein the one or more solubilizing agent is selected from urea, diethylene glycol, diethylene glycol monomethylether, diethylene glycol monoethylether, triethylene glycol, propanediol, ethane diol, glycerol, ε-caprolactam, 2-(dimethylamino)ethanol, diisopropanolamine, monoethanolamine, diethanolamine, triethanolamine and combinations of two or more of these.

[1.21] Composition as defined under any one of items [1.1] to [1.20], wherein the composition contains a color-imparting compound.

[1.22] Composition as defined under item [1.21], wherein the color-imparting compound imparts a red, blue or violet tint.

[1.23] Composition as defined under item [1.21] or [1.22], wherein the color-imparting compound is a dye.

[1.24] Composition as defined under item [1.23], wherein the color-imparting compound is selected from the group consisting of a direct dye, a pigment dye, an acid dye a disperse dye and a combination of these.

[1.25] Composition as defined under item [1.23], wherein the color-imparting compound is selected from the group consisting of direct violet 9, direct blue 251, direct blue 240, direct violet 66, direct violet 35, direct blue 199, acid violet 48, disperse violet 28 and a combination of these.

[1.26] Composition as defined under item [1.23], wherein the color-imparting compound is selected from direct violet 9, direct blue 199 or a combination of these.

[1.27] Composition as defined under any one of items [1.1] to[1.26], wherein the pH of the composition is in the range of 3-12.

[1.28] Composition as defined under any one of items [1.1] to [1.26], wherein the pH of the composition is in the range of 4-10.

[1.29] Composition as defined under any one of items [1.1] to [1.26], wherein the pH of the composition is in the range of 5-8.

[1.30] Composition as defined under any one of items [1.1] to [1.26], wherein the pH of the composition is in the range of 5-7.

[1.31] Composition as defined under any one of items [1.1] to [1.30], wherein each of M1 and M2 in formula (I) and (II), respectively, is independently selected from H, Li, Na, K, $NH_4^+$.

[1.32] Composition as defined under any one of items [1.1] to [1.30], wherein each of M1 and M2 in formula (I) and

(II), respectively, is independently selected from Li, Na, K, $NH_4^+$.

[1.33] Composition as defined under any one of items [1.1] to [1.30], wherein each of M1 and M2 in formula (I) and (II), respectively, is independently Na or K.

[1.34] Composition as defined under any one of items [1.1] to [1.33], wherein the composition furthermore contains one or more agents selected from a wax, a textile softening agent and a non-iron finishing agent.

[1.35] Composition as defined under item [1.34], wherein the non-iron finishing agent is dimethylol ethylene urea (DMEU) or dimethylol dihydroxyethylene urea (DMDHEU) and a catalyst that is suitable for reacting these compounds with one or more hydroxyl groups.

[1.36] Composition as defined under item [1.35], wherein the catalyst is selected from a magnesium compound, a titanium compound, an ammonium compound and a combination of these.

[1.37] Composition as defined under item [1.35], wherein the catalyst is selected from magnesium chloride, magnesium sulfate, titanium oxide, ammonium chloride, ammonium sulfate and a combination of these.

[1.38] Composition as defined under any one of items [1.35] to [1.37], wherein the pH is in the range of 3-7.

[1.39] Composition as defined under any one of items [1.35] to [1.37], wherein the pH is in the range of 3.5-6.

[1.40] Composition as defined under any one of items [1.35] to [1.37], wherein the pH is in the range of 4-5.

[1.41] Composition as defined under any one of items [1.35] to [1.37], wherein the pH is adjusted by adding an acide selected from the group consisting of acetic acid, formic acid, citric acid and its hydrated forms, hydrochloric acid, sulfuric acid, sulfurous acid, phosphoric acid, phosphorous acid maleic acid, maleic acid anhydride and combinations of these.

The composition as defined under any one of items [1.1] to [1.41] is also referred to as "optical brightening agents-containing composition" or, abbreviated, as "OBA-containing composition".

Furthermore, the present invention encompasses the following embodiments according to the second aspect of the invention.

[2.1] Method of preparing said composition according to any one of items [1.1] to [1.41], which method comprises dissolving said compound A, said compound B and any optional compound in water.

The present invention encompasses the following embodiments according to the third aspect of the invention.

[3.1] Method of treating a textile product comprising, in the following order, the steps of

(i) Impregnating a textile product with said composition according to any one of items [1.1] to [1.41], wherein said textile product comprises cellulose fibers,
(ii) optionally storing the impregnated textile product for a period of 1-24 hours, and
(iii) drying the textile product obtained from step (i) or step (ii).

[3.2] Method of treating a textile product as defined under item [3.1], wherein said step (i) is carried out by immersing the fabric into said composition.

[3.3] Method of treating a textile product as defined under item [3.1] or [3.2], wherein said step (ii) is carried out for a period of 2-20 hours.

[3.4] Method of treating a textile product as defined under item [3.1] or [3.2], wherein said step (ii) is carried out for a period of 3-18 hours.

[3.5] Method of treating a textile product as defined under item [3.1] or [3.2], wherein said step (ii) is carried out for a period of 4-15 hours.

[3.6] Method of treating a textile product as defined under item [3.1] or [3.2], wherein said step (ii) is carried out for a period of 5-12 hours.

[3.7] Method of treating a textile product as defined under any one of items [3.1] to [3.6], wherein said step (iii) is carried out at a temperature of 60-160 °C.

[3.8] Method of treating a textile product as defined under any one of items [3.1] to [3.6], wherein said step (iii) is carried out at a temperature of 90-130 °C.

[3.9] Method of treating a textile product as defined under any one of items [3.1] to [3.8], wherein the composition used in step (i) comprises a non-iron finishing agent as defined under any one of items [1.34] to [1.37] and said step (iii) of drying the textile product is followed by a step (iv) of heating the textile product to a temperature of 150-200 °C for a period of 10-300 seconds.

[3.10] Method of treating a textile product as defined under item [3.9], wherein the step (iv) is carried out at a temperature of 160-190 °C for a period of 20-200 seconds.

[3.11] Method of treating a textile product as defined under item [3.9], wherein the step (iv) is carried out at a temperature of 160-180 °C for a period of 20-100 seconds.

[3.12] Method of treating a textile product as defined under item [3.9], wherein the step (iv) is carried out at a temperature of 160-180 °C for a period of 20-60 seconds.

[3.13] Method of treating a textile product as defined under any one of items [3.1] to [3.12], wherein the weight of cellulose fibers relative to the total weight of said textile product is 10 % or higher.

[3.14] Method of treating a textile product as defined under any one of items [3.1] to [3.12], wherein the weight of cellulose fibers relative to the total weight of said textile product is 25 % or higher.

[3.15] Method of treating a textile product as defined under any one of items [3.1] to [3.12], wherein the weight of cellulose fibers relative to the total weight of said textile product is 50 % or higher.

[3.16] Method of treating a textile product as defined under any one of items [3.1] to [3.12], wherein the weight of cellulose fibers relative to the total weight of said textile product is 75 % or higher.

[3.17] Method of treating a textile product as defined under any one of items [3.1] to [3.12], wherein the weight of cellulose fibers relative to the total weight of said textile product is 80 % or higher.

[3.18] Method of treating a textile product as defined under any one of items [3.1] to [3.12], wherein the weight of cellulose fibers relative to the total weight of said textile product is 90 % or higher.

[3.19] Method of treating a textile product as defined under any one of items [3.1] to [3.12], wherein the weight of cellulose fibers relative to the total weight of said textile product is 95 % or higher.

[3.20] Method of treating a textile product as defined under any one of items [3.1] to [3.12], wherein the weight of cellulose fibers relative to the total weight of said textile product is 100 %.

[3.21] Method of treating a textile product as defined under any one of items [3.13] to [3.20], wherein the textile product comprises fibers of a material selected from the group consisting of polyester, polyamide, polyacryl, elastan and combinations of these.

[3.22] Method of treating a textile product as defined under any one of items [3.1] to [3.21], wherein the cellulose fiber is a cotton fiber, regenerated fiber, viscose fiber, lyocell fiber, or modal fiber.

[3.23] Method of treating a textile product as defined under any one of items [3.1] to [3.22], wherein the textile product is a yarn, a fabric or non-woven.

[3.24] Method of treating a textile product as defined under any one of items [3.1] to [3.23], wherein the textile product is a woven, knitted, crocheted, tatted or braided fabric, a lose fiber, or a non-woven fabric.

[3.25] Method of treating a textile product as defined under any one of items [3.1] to [3.24], wherein the textile product is

a yarn or a fabric wound on a roll and the step (i) of impregnating the textile product is preceded by a step (i-1) of unwinding the fabric from said roll.

[3.26] Method of treating a textile product as defined under item [3.25], wherein the step (i) of impregnating said textile product is followed by a step (i-2) of winding the impregnated fabric onto a roll.

[3.27] Method of treating a textile product as defined under item [3.26], wherein the step (iii) of drying said textile product is preceded by a step (iii-1) of unwinding the impregnated fabric from said roll.

[3.28] Method of treating a textile product as defined under any one of items [3.1] to [3.24], wherein the textile product is a garment, a home textile or a technical textile.

[3.29] Method of treating a textile product as defined under item [3.28], wherein the garment is a shirt, a blouse, a pair of trousers, a vest or a jacket.

Furthermore, the present invention encompasses the following embodiments according to the fourth aspect of the invention.

[4.1] Textile product obtainable from the method according to the third aspect of the invention as defined under any one of items [3.1] to [3.29].

[4.2] Textile product comprising cellulose fibres bearing a compound A of formula (I) and a compound B of formula (II).

[4.3] Textile product as defined under item [4.1] or [4.2], wherein the weight of cellulose fibers relative to the total weight of said textile product is 10 % or higher.

[4.4] Textile product as defined under item [4.1] or [4.2], wherein the weight of cellulose fibers relative to the total weight of said textile product is 25 %.

[4.5] Textile product as defined under item [4.1] or [4.2], wherein the weight of cellulose fibers relative to the total weight of said textile product is 50 %.

[4.6] Textile product as defined under item [4.1] or [4.2], wherein the weight of cellulose fibers relative to the total weight of said textile product is 75 %.

[4.7] Textile product as defined under item [4.1] or [4.2], wherein the weight of cellulose fibers relative to the total weight of said textile product is 80 %.

[4.8] Textile product as defined under item [4.1] or [4.2], wherein the weight of cellulose fibers relative to the total weight of said textile product is 90 %.

[4.9] Textile product as defined under item [4.1] or [4.2], wherein the weight of cellulose fibers relative to the total weight of said textile product is 95 %.

[4.10] Textile product as defined under item [4.1] or [4.2], wherein the weight of cellulose fibers relative to the total weight of said textile product is 100 %.

[4.11] Textile product as defined under any one of items [4.1] to [4.10], wherein the cellulose fiber is a cotton fiber, regenerated fiber, viscose fiber, lyocell fiber, or modal fiber.

[4.12] Textile product as defined under any one of items [4.1] to [4.11], wherein the textile product is a yarn, a fabric or non-woven.

[4.13] Textile product as defined under any one of items [4.1] to [4.11], wherein the textile product is a woven, knitted, crocheted, tatted or braided fabric, a lose fiber, or a non-woven fabric.

[4.14] Textile product as defined under item [4.13], wherein the textile product is a garment, a home textile or a technical textile.

[4.15] Textile product as defined under item [4.14], wherein the garment is a shirt, a blouse, a pair of trousers, a vest or a jacket.

**First aspect: Composition comprising a compound of formula (I), a compound of formula (II) and water**

According the first aspect of the invention, a composition is provided which comprises a compound A of formula (I)

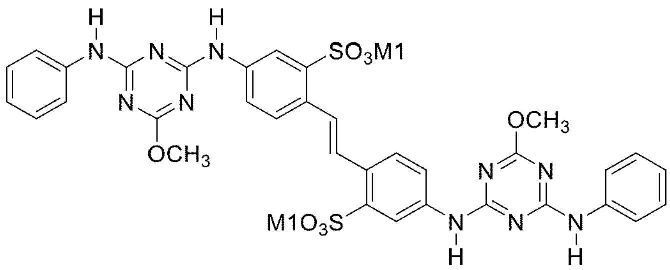

Formula (I)

wherein M1 is independently selected from H, Li, Na, K, $NH_4^+$, $R^a{}_4N^+$, $R^a{}_{(4-m)}NH_m$, in which m is 1, 2, or 3 and Ra is independently selected from alkyl groups having 1-4 carbon atoms and hydroxyethyl groups;

a compound B of formula (II)

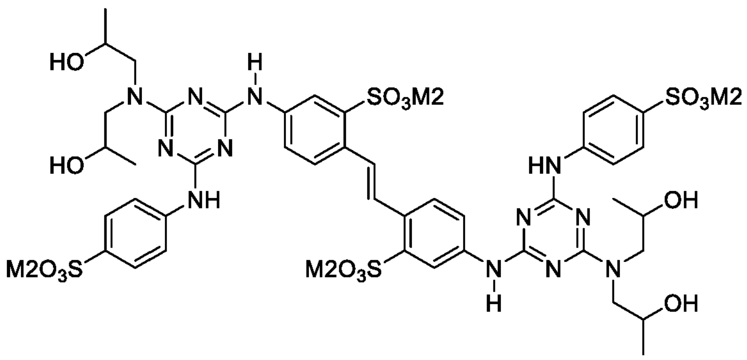

Formula (II)

wherein M2 is independently selected from H, Li, Na, K, $NH_4^+$, $R^a{}_4N^+$, $R^a{}_{(4-m)}NH_m$, in which m is 1, 2, or 3 and Ra is an alkyl group having 1-4 carbon atoms and hydroxyethyl groups;
and water,
wherein
the weight ratio compound A : compound B is in the range of 0.10 to 3.00, and
the total weight of compound A and compound B relative to the total weight of the composition is 0.10 to 50 %.

It was surprisingly found that a composition according to this aspect of the invention is stable over a broad pH range, i.e. no precipitates are formed, whereas CI 263 (an example of compound B) alone is known as being essentially insoluble in water at pH 5 or lower. This improved stability at low pH makes it possible to incorporate additional agents which require a low pH. At the same time, it was found that a combination of compound A and compound B acts as an optical brightening agent having improved wash fastness such that the whitening and brightening effect persists even after repeated washing of the textile product treated with the composition according to this aspect of the invention.

Without wishing to be bound to any theory, it is believed that the composition according to this aspect of the invention has the aforementioned advantageous properties as a result of interactions between the molecules of compound A and the molecules of compound B. This interaction might be related to interactions between the $\pi$-electrons of the stilbene scaffold. That is, compound B could be regarded as representing a vehicle for compound A. In a composition according to this aspect of the invention, compound A and compound B are stable in a dispersed or dissolved state, i.e. no precipitates are formed.

Preferred embodiments of the composition according to this aspect of the invention will become apparent from the following description.

In particular, in formula (I) and formula (II), each of M1 and M2 can be independently selected from H, Li, Na, K,

$NH_4^+$, preferably from Li, Na, K, $NH_4^+$. Most preferably, each of M1 and M2 can be independently selected from Na and K.

The weight ratio compound A : compound B is in the range of 0.20 to 2.50, preferably in the range of 0.25 to 2.20, more preferably in the range of 0.30 to 1.00, still more preferably in the range of 0.30 to 0.80, most preferably in the range of 0.30 to 0.50.

In alternative preferred embodiments, the weight ratio compound A : compound B is in the range of the weight ratio compound A : compound B is in the range of 1.01 to 2.50, more preferably in the range of 1.50 to 2.30, most preferably in the range of 1.70 to 2.10. When the weight ratio of compound A and compound B is in the range of 1.01 to 2.50, it can be preferable to monitor the concentration of alkaline earth metal ions (such as magnesium ions) in the composition, because it was found that a combination of a comparably high amount of compound A relative to the amount of compound B can have the problem of reduced stability of the composition, i.e. precipitates can form, when alkaline earth metal ions are present in a relatively high concentration, although the stability of the composition is generally high. Thus, when the weight ratio compound A : compound B is in the range of 1.01 to 2.50, it can be advantageous that the composition contains alkaline earth metal ions in an amount of less than 1 g/l, preferably 0.5 g/l, more preferably 0.2 g/l, in particular when the alkaline earth metal ions are selected from calcium ions, magnesium ions and a combination of these.

In a composition according to this aspect of the invention, compound A and compound B can be stably present in a relatively high concentration. For instance, the total weight of compound A and compound B relative to the total weight of the composition can be as high as 50 %, which is particularly advantageous for storage. That is, it is possible to provide a composition comprising compound A and compound B having a relatively high concentration as a stock solution and/or for storage, which composition could also be referred to as a "concentrate". To this end, the total weight of compound A and compound B relative to the total weight of the composition can preferably be in a range of 10 to 40 %.

When the composition is applied to a textile product, it can be desirable to adjust the total weight of compound A and compound B relative to the total weight of the composition to 0.10 % or higher, such as to a range of 0.10 to 1.0 %. Preferably, the total weight of compound A and compound B relative to the total weight of the composition can 0.15 to 0.8 %. This concentration range can be achieved in an advantageous manner by diluting (i.e. by adding additional water) the aforementioned "concentrate" or stock solution, which can be conveniently stored as a stable composition despite the high concentration of compound A and compound B. This allows a convenient and quick preparation of a liquid low-viscous composition that can be applied to a textile product.

The composition according to this aspect of the invention can contain various additives and auxiliary agents. For instance, the composition can contain one or more solubilizing agents, a color-imparting compound one or more agents selected from a wax, a textile softening agent and a non-iron finishing agent, a catalyst such as a catalyst for reacting the non-iron finishing agent, which contains polymerizable low-molecular weight building blocks, so as to form polymeric compounds on and between the fibers of the textile product, and a pH-adjusting agent.

When the composition contains one or more solubilizing agents, this agent or these agents are present in an amount of 0.70-1.50 parts by weight relative to 1.00 part by weight of compound A and compound B, preferably in an amount of 0.80-1.40 parts by weight relative to 1.00 part by weight of compound A and compound B. The one or more solubilizing agent can be selected from urea, diethylene glycol, diethylene glycol monomethylether, diethylene glycol monoethylether, triethylene glycol, propanediol, ethane diol, glycerol, ε-caprolactam, 2-(dimethylamino)ethanol, diisopropanolamine, monoethanolamine, diethanolamine, triethanolamine and combinations of two or more of these.

When the composition contains a color-imparting compound, it is desirable that the color-imparting compound imparts a red, blue or violet tint. It has been found that a red, blue or violet tint can promote the whitening or brightening effect of the optical brightening agents present in the composition of this aspect of the invention. In preferred embodiments, the color-imparting compound is a dye, which can be selected from the group consisting of a direct dye, a pigment dye, an acid dye a disperse dye and a combination of these. For instance, the dye is selected from the group consisting of direct violet 9, direct blue 251, direct blue 240, direct violet 66, direct violet 35, direct blue 199, acid violet 48, disperse violet 28 and a combination of these. Formulations containing color-imparting compounds suitable for being used in the composition according to this aspect of the invention are commercially available, such as from CHT Germany GmbH (Tübingen, Germany) under the tradenames Indosol SF-BL, Indosol SF-BL 240, TUBANTIN TÜRKIS FBL, TUBANTIN VIOLET BL 200, TUBANTIN BLAU GLL 300, TUBANTIN ROSA 2B, Pergasol Violet B, TUBANTIN ROT 6BLL conc., Bemacid Violett F-B, Bemacid Blau GLF 200 %, Bemacid Blau F-BL, Bemacid Rot F-4B, Bemacronviolett RL 300, Bemacronblau E-FBL, Bezaprint Blau RR, Bezaprint Violett B-TN, for instance. The tint imparted by direct violet 9, direct blue 199 or a combination of these has been found to be particularly effective in promoting the whitening or brightening effect of the optical brightening agents present in the composition of this aspect of the invention and therefore are preferred.

As a non-iron finishing agent, the composition can contain dimethylol ethylene urea (DMEU) or dimethylol dihydroxyethylene urea (DMDHEU) or a combination of these and a catalyst that is suitable for reacting these compounds with one or more hydroxyl groups. The catalyst can be selected from a magnesium compound, a titanium compound, an ammonium compound and a combination of these. For instance, the catalyst is selected from magnesium chloride, magnesium sulfate, titanium oxide, ammonium chloride, ammonium sulfate and a combination of these.

The pH of the composition according to this aspect of the invention can be adjusted as required in view of the

solubility of agents present in the composition other than compound A and compound B. As mentioned, softening agents usually have limited solubility in aqueous media having a basic pH. Thus, in order to achieve solubility as desired, the pH of the composition can be adjusted within the range of 3-12, preferably within the range of 4-10, more preferably within the range of 5-8, and still more preferably within the range of 5-7.

When dimethylol ethylene urea (DMEU) and/or dimethylol dihydroxyethylene urea (DMDHEU) is present in the composition as a non-iron finishing agent, it is usually preferred to adjust the pH within a range of 3 to 7, more preferably within a range of 3.5 to 6 and most preferably within a range of 4 to 5.

It is commonly known to the skilled person that the pH of a composition of this aspect of the invention can be adjusted by adding an acidic or basic agent in an amount suitable for effecting the desired increase or decrease of the pH. For instance, the pH can be descreased by adding an acid selected from the group consisting of acetic acid, formic acid, citric acid and its hydrated forms, hydrochloric acid, sulfuric acid, sulfurous acid, phosphoric acid, phosphorous acid maleic acid, maleic acid anhydride and combinations of these.

The composition can also contain organic by-products and inorganic salts arising from the synthesis of its components to the extent and in amounts which do not impair the object of the invention.

**Second aspect: Method of preparing the composition according to the first aspect of the invention**

According to the second aspect of the invention, a method is provided for preparing the composition according to the first aspect of the invention.

The composition can be conveniently prepared by mixing all ingredients, i.e. compound A, compound B, any optional additive and auxiliary agent as desired, and water in appropriate amounts so as to adjust the weight ratio compound A : compound B and the total weight of compound A and compound B relative to the total weight of the composition. The specific means for effecting mixing are not particularly limited and can be suitable selected by the skilled person.

It can be advantageous to provide compound A and/or compound B and, likewise, any optional additive and auxiliary agent as desired, in the form of a concentrated solution, which concentrated solution(s) can then be mixed in suitable amounts.

**Third aspect: Method of applying said composition according to the first aspect of the invention to a textile product**

According to the third aspect of the invention, a method of treating a textile product is provided, which method comprises, in this order, the steps of

(i) Impregnating a textile product with said composition according to the first aspect of the invention, wherein said textile product comprises cellulose fibers,
(ii) optionally storing the impregnated textile product for a period of 1-24 hours, and
(iii) drying the textile product obtained from step (i) or step (ii).

It is preferred to carry out the method according to this aspect of the invention using a composition having a concentration such that the total weight of compound A and compound B relative to the total weight of the composition is 0.10 % or higher, but not higher than 10 %.

Commonly, the total weight of compound A and compound B relative to the total weight of the composition will be adjusted to a range of 0.10 to 1.0 %. Preferably, the total weight of compound A and compound B relative to the total weight of the composition can 0.15 to 0.8 %.

The step of impregnating the textile product is also referred to as "padding" and can be carried out by immersing the textile product into said composition, for instance by passing the textile product through the composition, or by spraying the composition onto the textile product. In particular, when impregnating the textile product is carried out by immersing the textile product into said composition, it can be desirable to remove any excess composition (also referred to as draining) by passing the textile product through the nip of pressure cylinders or rollers, which also ensures intimate contact of the composition with the textile product. The sequence of immersing the textile product, for instance by passing the textile product through the composition, and passing the textile product through the nip of pressure cylinders or rollers is also referred to as Foulard's process.

It is preferred allow the composition and the textile product to remain in contact after said step (ii). This can for instance be effected by storing the impregnated textile product obtained from step (i) for an extended period of time, such as for a period of 1-24 hours. More preferably, said step (ii) is carried out for a period of 2-20 hours, still more preferably for a period of 3-18 hours, even more preferably for a period of 4-15 hours, most preferably for a period of 5-12 hours.

The conditions applied for drying the textile product in step (iii) are not particularly limited. However, in order to

achieve accelerated drying, it is preferred to carry said step (iii) at a temperature of 60-160 °C, more preferably at a temperature of 90-130 °C. In this manner, any creasing and/or wrinkling of the textile product can be removed as well.

As mentioned, the composition according to the first aspect of the invention can comprise a non-iron finishing agent. In this case, it is desirable to carry out a heat treatment as step (iv), i.e. after said step (iii). Typically, said heat treatment is carried out by heating the textile product to a temperature of 150-200 °C, preferably 160-190 °C, more preferably 160-180 °C. Said heating of the textile product is typically carried out for a period of 10-300 seconds, preferably for a period of 20-200 seconds, more preferably for a period of 20-100 seconds, still more preferably for a period of 20-60 seconds. In view of this, said step (iv) can be carried out by heating the textile product to a temperature of 150-200 °C for a period of 10-300 seconds. Preferably, said heat treatment is carried out by heating the textile product to a temperature of 160-190 °C for a period of 20-200 seconds, more preferably 160-180 °C for a period of 20-100 seconds, still more preferably 160-180 °C for a period of 20-60 seconds. Heating can be effected by hot air (i.e. hot air having a low relative humidity) or steam (i.e. hot air having a high relative humidity such as 80 % or more, 90 % or more, 95 % or more or 100 %).

It was mentioned hereinabove that the optical brightening agents used in the present invention have an affinity to cellulose fibers. Accordingly, it is essential that the textile product to be treated comprises cellulose fibers such as cotton fibers, regenerated fibers, viscose fibers, lyocell fibers, or modal fibers. In preferred embodiments, the weight of cellulose fibers relative to the total weight of said textile product is 10 % or higher, more preferably 25 % or higher, still more preferably 50 % or higher, even more preferably 75 % or higher, yet more preferably 80 % or higher, particularly preferably 90 %. Most preferably, the textile product comprises cellulose fibers in such an amount that the weight of cellulose fibers relative to the total weight of said textile product is 95 % or higher, such as 100 %. The textile product can comprise fibers different from cellulose fibers, such as fibers of a material selected from the group consisting of polyester, polyamide, polyacryl, elastan and combinations of these. The textile product is not particularly limited as regards its constitution and it can be a yarn, a fabric or a non-woven, for instance a woven, knitted, crocheted, tatted or braided fabric, a lose. fiber, or a non-woven fabric.

Before being treated, the textile product can be wound on a roll and, in this case, step (i) of impregnating the textile product is preceded by a step (i-1) of unwinding the fabric from said roll. It is also possible that said step (i) of impregnating said textile product is followed by a step (i-2) of winding the impregnated fabric onto a roll for storing the textile product according to step (ii). In this case, step (iii) of drying said textile product is preferably preceded by a step (iii-1) of unwinding the impregnated fabric from said roll.

The textile product can be a garment, a home textile or a technical textile. When the textile product is a garment, it can for instance be a shirt, a blouse, a pair of trousers, a vest or a jacket.

**Fourth aspect: Textile product obtainable from the method according to the third aspect of the invention**

According to the fourth aspect of the invention, a textile product is provided that is obtainable from the method according to the third aspect of the invention. That is, a textile product is provided that comprises cellulose fibres bearing a compound A of formula (I) and a compound B of formula (II).

As mentioned, the cellulose fibers in the textile product can be cotton fibers, regenerated fibers, viscose fibers, lyocell fibers, or modal fibers, and the weight of the cellulose fibers relative to the total weight of said textile product is preferably 10 % or higher, more preferably 25 % or higher, still more preferably 50 % or higher, even more preferably 75 % or higher, yet more preferably 80 % or higher, particularly preferably 90 %. Most preferably, the textile product comprises cellulose fibers in such an amount that the weight of cellulose fibers relative to the total weight of said textile product is 95 % or higher, such as 100 %. The textile product can comprise fibers different from cellulose fibers, such as fibers of a material selected from the group consisting of polyester, polyamide, polyacryl, elastan and combinations of these.

The textile product is not particularly limited as regards its constitution and it can be a yarn, a fabric or a non-woven, for instance a woven, knitted, crocheted, tatted or braided fabric, a lose fiber, or a non-woven fabric. The textile product can be a garment, a home textile or a technical textile. When the textile product is a garment, it can for instance be a shirt, a blouse, a pair of trousers, a vest or a jacket.

**Examples**

In the following, the present invention is illustrated by means of the following examples and comparative examples.

**General observations**

In the examples and comparative examples, the following materials and analytical methods are used.

**(1) Degree of whiteness according to Berger (Berger Whiteness)**

The degree of whiteness according to Berger (in the following also referred to as "Berger Whiteness" or, abbreviated, as "BW") is measured by illuminating a sample of the fabric with light emitted from a CIE standard illuminant D65. The values Rx, Ry and Rz are measured using a colorimeter and the Berger Whiteness BW is calculated according to the following equation.

$$BW = Ry + 3(Rz - Rx)$$

**(2) Materials used**

In the examples and comparative examples, the following materials were used.

**(2.1) Optical brighteners**

As exemplary compound of formula (I), dinatrium-4,4'-bis[(4-anilino-6-methoxy-1,3,5-triazin-2-yl)amino]stilben -2,2'-disulfonat (CAS registry no. 3426-43-5) is used, which compound is represented by formula (I) in which M = Na. This compound is commonly also referred as Fluorescent Brightener C.I. 134. For reasons of legibility, this compound is herein also referred to as "CI134".

A stock solution of CI 134 is prepared by mixing the following components under agitation:

| | |
|---|---|
| 2,2'-Oxydiethanol | 5 parts by weight |
| 2,2',2"-Nitrilotriethanol | 15 parts by weight |
| Urea | 23 parts by weight |
| CI134 | 31 parts by weight |
| Tap water | 26 parts by weight |

The pH of this stock solution is 6.5 to 8.5.

As exemplary compound of formula (II), tetranatrium-4,4'-bis[[4-[bis(2-hydroxypropyl)amino]-6-[(4-sulfonatophenyl)amino]-1,3,5-triazin-2-yl]amino]-stilbene-2,2'-disulfonat (CAS registry no. 67786-25-8) is used, which compound is represented by formula (II) in which M = Na. This compound is commonly also referred as Fluorescent Brightener C.I. 263. For reasons of legibility, this compound is herein also referred to as "CI263".

A stock solution of CI263 is prepared by mixing the following components under agitation:

| | |
|---|---|
| Polyethylene glycol | 5.5 parts by weight |
| CI263 | 25 parts by weight |
| Tap water | 69.5 parts by weight |

The pH of this stock solution is 7.5 to 11.

As exemplary comparative compound, hexanatrium-2,2'-[vinylenbis[(3-sulfonato-4,1-phenylen)imino[6-morpholino-1,3,5-triazin-4,2-diyl]imino]]bis(benzol-1,4-disulfonate (CAS registry no. 52301-70-9) is used, which is commonly also referred to as Fluorescent Brightener C.I. 353. For reasons of legibility, this compound is herein also referred to as "CI353".

A stock solution of CI353 is prepared by mixing the following components under agitation:

| | |
|---|---|
| Ethane diol | 9.9 parts by weight |
| Diisopropanolamine | 4 parts by weight |
| Polyethylene glycol | 14 parts by weight |
| CI353 | 18 parts by weight |
| Tap water | 54.1 parts by weight |

**(2.2) Auxiliary agents**

The following auxiliary agents were used, which in particular act as solubilizing agents (in parentheses the CAS

registry number is indicated).

| | |
|---|---|
| Ethandiol | (107-21-1) |
| 2,2'-Oxydiethanol | (111-46-6) |
| 2,2',2"-Nitrilotriethanol | (102-71-6) |
| Diisopropanolamine | (110-97-4) |
| Urea | (57-13-6) |
| Polyethylene glycol | (25322-68-3) |
| Water: | Tap water having a hardness of 3 °dH |

The following dyes were used in order to adjust the tint of the optical brightener compositions.

| | |
|---|---|
| C.I. Direct Violet 9 | (6227-14-1) |
| C.I. Direct Blue 199 | (12222-04-7) |

The following agents were used as auxiliary agents for the purpose indicated.

| | |
|---|---|
| Polyavin PEN: | Aqueous emulsion of (HDPE) polyethylene wax used in order to reduce the dynamic friction and improve the tear resistance of the fabric such that sewability of the fabric is improved. Product commercially available from CHT Germany GmbH. |
| Arristan 71: | Siloxane formulation, improves soft hand of fabric. Product commercially available from CHT Germany GmbH. |
| Reaknitt FF: | Etherified dimethylol dihydroxyethylene urea, curable resin preparation as non-iron finishing agent. Product commercially available from CHT Germany GmbH. |
| $MgCl_2 \cdot 6\ H_2O$: | Curing/crosslinking catalyst for Reaknitt FF. For reasons of legibility, this compound is herein also referred to as "magnesium chloride". |
| Kollasol HWR: | Formulation of non-ionic surfactants. Product commercially available from CHT Germany GmbH. |

**Example 1: OBA A**

A composition OBA A is prepared by mixing

59.5 parts by weight of the stock solution of CI134,
35.7 parts by weight of the stock solution of CI263 and
4.8 parts by weight of urea
under agitation. This composition is can be used for treating fibres.

The constitution of this composition is summarized in the following table.

| | Amount [wt.-%] |
|---|---|
| CI134 | 18.4 |
| CI263 | 8.9 |
| 2,2'-Oxydiethanol | 3.0 |
| 2,2',2"-Nitrilotriethanol | 8.9 |
| Urea | 18.5 |
| Polyethylene glycol | 2.0 |
| Water | 40.3 |
| Total of non-aqueous components | 59.7 |
| Total of CI134 and CI263 | 27.4 |
| Weight ratio CI134 : CI263 | 2.1 |
| Total of auxiliary agents | 32.4 |

(continued)

| | Amount [wt.-%] |
|---|---|
| Weight ratio auxiliary agents : CI134 and CI263 | 1.2 |

**Example 2: OBA A-reddish tint**

A ready-to-use composition for imparting a reddish-white impression to the treated fabric is prepared from composition OBA A by adding a dye and water as summarized in the following table.

| | Amount [parts by weight] |
|---|---|
| OBA A | 70.0 |
| C.I. Direct Violet 9 | 0.7 |
| Water | 29.3 |
| Total of non-aqueous components | 42.5 |
| Total of CI134 and CI263 | 19.2 |
| Weight ratio CI134 : CI263 | 2.1 |
| Total of auxiliary agents | 22.6 |
| Weight ratio auxiliary agents : CI134 and CI263 | 1.2 |

**Example 3: OBA A-blueish tint**

A ready-to-use composition for imparting a blueish-white impression to the treated fabric is prepared from composition OBA A by adding C.I. Direct Violet 9 and C.I. Direct Blue 199 as dyes and water as summarized in the following table.

| | Amount [parts by weight] |
|---|---|
| OBA A | 70.0 |
| C.I. Direct Violet 9 | 0.5 |
| C.I. Direct Blue 199 | 0.5 |
| Water | 29.0 |
| Total of non-aqueous components | 42.8 |
| Total of CI134 and CI263 | 19.2 |
| Weight ratio CI134 : CI263 | 2.1 |
| Total of auxiliary agents | 22.6 |
| Weight ratio auxiliary agents : CI134 and CI263 | 1.2 |

**Example 4: OBA B**

A composition OBA B is prepared by mixing

20.2 parts by weight of the stock solution of CI134,
70.7 parts by weight of the stock solution of CI263 and
9.1 parts by weight of urea
under agitation. This composition is can be used for treating fibres.

The constitution of this composition is summarized in the following table.

| Component | Amount [wt.-%] |
|---|---|
| CI134 | 6.26 |
| CI263 | 17.68 |

(continued)

| Component | Amount [wt.-%] |
|---|---|
| 2,2'-Oxydiethanol | 1.01 |
| 2,2',2"-Nitrilotriethanol | 3.03 |
| Urea | 13.75 |
| Polyethylene glycol | 3.89 |
| Water | 49.14 |
| Total of non-aqueous components | 45.6 |
| Total of CI134 and CI263 | 23.9 |
| Weight ratio CI134 : CI263 | 0.4 |
| Total of auxiliary agents | 21.7 |
| Weight ratio auxiliary agents : CI134 and CI263 | 0.9 |

**Example 5: OBA B-reddish tint**

A composition for imparting a reddish-white impression to the treated fabric is prepared from composition OBA B by adding C.I. Direct Violet 9 as a dye and water as summarized in the following table.

| | Amount [parts by weight] |
|---|---|
| OBA B | 70.0 |
| C.I. Direct Violet 9 | 0.7 |
| Water | 29.3 |
| Total of non-aqueous components | 32.6 |
| Total of CI134 and CI263 | 16.8 |
| Weight ratio CI134 : CI263 | 0.4 |
| Total of auxiliary agents | 15.2 |
| Weight ratio auxiliary agents : CI134 and CI263 | 0.9 |

**Example 6: OBA B-blueish tint**

A composition for imparting a blueish-white impression to the treated fabric is prepared from composition OBA B by mixing in C.I. Direct Violet 9 and C.I. Direct Blue 199 as dyes and water as summarized in the following table.

| Component | Amount [parts by weight] |
|---|---|
| OBA B | 70.0 |
| C.I. Direct Violet 9 | 0.5 |
| C.I. Direct Blue 199 | 0.5 |
| Water | 29.0 |
| Total of non-aqueous components | 32.9 |
| Total of CI134 and CI263 | 16.8 |
| Weight ratio CI134 : CI263 | 0.4 |
| Total of auxiliary agents | 15.2 |
| Weight ratio auxiliary agents : CI134 and CI263 | 0.9 |

**Comparative examples 1 to 6: CI134**

Application liquids are prepared from the above-described stock solution of CI134 according to the following procedure.

300 g of water are placed in a beaker and the components are added in the amounts indicated in the following table under stirring. Then water is added to a total volume of the mixture of 1000 ml.

A sample of the application liquid is allowed to stand at 22 °C and another sample of the application liquid is heated to 40 °C and allowed to stand at this temperature. After 1 hour, visual inspection of the sample is carried out in order to evaluate whether the application liquid is a stable solution or whether precipitates form.

The constitution of the application liquids as well as the results of the visual inspection are summarized in the following table, in which amounts are given in gram (g) per 1000 g of the mixture and the stability is indicated by means of "Y" (i.e. stable, no precipitate is observed) and "---" (i.e. not stable, precipitates are observed), respectively. The pH of each mixture was 5.5.

| Amounts given in gram per liter | | Comparative example | | | | | |
|---|---|---|---|---|---|---|---|
| | | 1 | 2 | 3 | 4 | 5 | 6 |
| Stock solution CI134 | | 7 | 7 | 7 | 7 | 7 | 7 |
| Magnesium chloride | | | 20 | | | | 8 |
| POLYAVIN PEN | | | | 50 | | | 10 |
| ARRISTAN 71 | | | | | 50 | 25 | 25 |
| REAKNITT FF | | | | | | | 40 |
| KOLLASOL HWR | | | | | | 1 | 1 |
| Acetic acid | | | | | | 0.5 | 0.5 |
| Stability | 22 °C | Y | --- | Y | Y | Y | --- |
| | 40 °C | Y | --- | Y | Y | Y | --- |

These data show that a stable application liquid containing Cl 134 and magnesium ions is not formed (cf. comparative examples 2 and 6) although the stock solution used comprises solubilizing agents. Therefore, CI134 is not suitable for being used together with non-iron finishing agents.

**Comparative examples 7 to 12: CI263**

Application liquids are prepared from the above-described stock solution of CI 263 according to the procedure described for comparative examples 1-6. Likewise, stability of the application liquid is evaluated according to the procedure described for comparative examples 1-6.

The constitution of the application liquids and the results of the stability evaluation are indicated in the following table.

| Amounts given in gram per liter | | Comparative example | | | | | |
|---|---|---|---|---|---|---|---|
| | | 7 | 8 | 9 | 10 | 11 | 12 |
| Stock solution CI263 | | 10 | 10 | 10 | 10 | 10 | 10 |
| Magnesium chloride | | | 20 | | | | 8 |
| POLYAVIN PEN | | | | 50 | | | 10 |
| ARRISTAN 71 | | | | | 50 | 25 | 25 |
| REAKNITT FF | | | | | | | 40 |
| KOLLASOL HWR | | | | | | 1 | 1 |
| Acetic acid | | | | | | 0.5 | 0.5 |
| Stability | 22 °C | Y | Y | Y | Y | Y | Y |
| | 40 °C | Y | Y | Y | Y | Y | Y |

These data show that a stable application liquid containing CI263 can be formed even in the presence of magnesium ions (cf. comparative examples 8 and 12). Therefore, CI263 is suitable for being used together with non-iron finishing agents.

**Comparative examples 13 and 14: CI353**

Application liquids are prepared from the above-described stock solution of CI 353 according to the procedure described for comparative examples 1-6. Likewise, stability of the application liquid is evaluated according to the procedure described for comparative examples 1-6.

The constitution of the application liquids and the results of the stability evaluation are indicated in the following table.

| Amounts given in gram per liter | | Comparative example 13 | Comparative example 14 |
|---|---|---|---|
| Stock solution CI353 | | 10 | 10 |
| Magnesium chloride | | | 8 |
| POLYAVIN PEN | | | 10 |
| ARRISTAN 71 | | 25 | 25 |
| REAKNITT FF | | | 40 |
| KOLLASOL HWR | | 1 | 1 |
| Acetic acid | | 0.5 | 0.5 |
| Stability | 22 °C | Y | Y |
| | 40 °C | Y | Y |

These data show that a stable application liquid containing CI353 can be formed even in the presence of magnesium ions (cf. comparative examples 13 and 14). Therefore, CI353 is suitable for being used together with non-iron finishing agents.

**Examples 7 to 11: OBA A**

Application liquids are prepared from the composition OBA A of example 1 according to the procedure described for comparative examples 1-6. Likewise, stability of the application liquid is evaluated according to the procedure described for comparative examples 1-6.

The constitution of the application liquids and the results of the stability evaluation are indicated in the following table.

| Amounts given in gram per liter | | Example 7 | Example 8 | Example 9 | Example 10 | Example 11 |
|---|---|---|---|---|---|---|
| OBA A | | 8 | 8 | 8 | 8 | 8 |
| Magnesium chloride | | | 20 | | | |
| POLYAVIN PEN | | | | 50 | | |
| ARRISTAN 71 | | | | | 50 | 25 |
| REAKNITT FF | | | | | | |
| KOLLASOL HWR | | | | | | 1 |
| Acetic acid | | | | | | 0.5 |
| Stability | 22 °C | Y | --- | Y | Y | Y |
| | 40 °C | Y | --- | Y | Y | Y |

These data show that a stable application liquid containing a mixture of CI134 and CI263, wherein CI134 is present in a relatively high amount (in OBA A, the weight ratio CI134 : CI263 is = 2.07 : 1) cannot be formed in the presence of magnesium ions (cf. example 8). Therefore, a composition containing a mixture of CI134 and CI263, wherein CI134 is present in a relatively high amount, is not suitable for being used together with non-iron finishing agents.

**Examples 12 to 17: OBA B**

Application liquids are prepared from the composition OBA B of example 4 according to the procedure described for comparative examples 1-6. Likewise, stability of the application liquid is evaluated according to the procedure described for comparative examples 1-6.

The constitution of the application liquids and the results of the stability evaluation are indicated in the following table.

| Amounts given in gram per liter | | Example | | | | | |
|---|---|---|---|---|---|---|---|
| | | 12 | 13 | 14 | 15 | 16 | 17 |
| OBA B | | 9 | 9 | 9 | 9 | 9 | 9 |
| Magnesium chloride | | | 20 | | | | 8 |
| POLYAVIN PEN | | | | 50 | | | 10 |
| ARRISTAN 71 | | | | | 50 | 25 | 25 |
| REAKNITT FF | | | | | | | 40 |
| KOLLASOL HWR | | | | | | 1 | 1 |
| Acetic acid | | | | | | 0.5 | 0.5 |
| Stability | 22 °C | Y | Y | Y | Y | Y | Y |
| | 40 °C | Y | Y | Y | Y | Y | Y |

These data show that a stable application liquid containing a mixture of CI134 and CI263, wherein CI134 is present in a relatively low amount (in OBA B, the weight ratio CI134 : CI263 is = 0.35 : 1) can be formed even in the presence of magnesium ions (cf. examples 13 and 17). Therefore, a composition containing a mixture of CI134 and CI263, wherein CI134 is present in a relatively low amount, is suitable for being used together with non-iron finishing agents.

**Evaluation of optical brightening**

The effect of optical brightening of a textile product is evaluated using a pre-bleached woven cotton poplin fabric. The Berger Whiteness of the untreated fabric is 85.

The cotton fabric is impregnated with the application liquid to be tested in a padding method with a pick-up rate of about 70 %. The impregnated cotton fabric is wrapped in a plastic film and stored 18 hours in order to allow the OBAs to develop its full potential. Then the impregnated cotton fabric is unwrapped and placed in a tenter. The fabric is dried at a temperature of 120 °C and, if a non-iron finishing agent is present, the non-iron finishing agent is cured by exposing the fabric to a temperature of 170 °C for 30 seconds. The Berger Whiteness is measured in order to evaluate the optical brightening effect.

Fastness to washing of the optical brightening effect is tested by washing the treated fabric in a domestic washing machine (manufacturer: Miele) one time or three times at 60 °C or 90 °C, drying the fabric, measuring the Berger Whiteness of the dried fabric and comparing it to the Berger Whiteness measured prior to washing, i.e. the after treatment. The Berger Whiteness difference ΔBW is calculate by subtracting minimum Berger Whiteness observed after washing from the Berger Whiteness observed prior to washing. The lower the ΔBW value, the higher is the fastness to washing, which indicates an advantageous optical brightening effect.

The results are shown in the following table. The composition of the application liquids is also shown again.

| | Example | | | Comparative example | | | | |
|---|---|---|---|---|---|---|---|---|
| | 11 | 16 | 17 | 5 | 11 | 12 | 13 | 14 |
| Stock solution CI134 | | | | 7 | | | | |
| Stock solution CI263 | | | | | 10 | 10 | | |
| Stock solution CI353 | | | | | | | 10 | 10 |
| OBA A | 8 | | | | | | | |
| OBA B | | 9 | 9 | | | | | |
| Magnesium chloride | | | 8 | | | 8 | | 8 |
| POLYAVIN PEN | | | 10 | | | 10 | | 10 |
| ARRISTAN 71 | 25 | 25 | 25 | 25 | 25 | 25 | 25 | 25 |
| REAKNITT FF | | | 40 | | | 40 | | 40 |
| KOLLASOL HWR | 1 | 1 | 1 | 1 | 1 | 1 | 1 | 1 |
| Acetic acid | 0.5 | 0.5 | 0.5 | 0.5 | 0.5 | 0.5 | 0.5 | 0.5 |
| Berger Whiteness | | | | | | | | |
| a) after treatment | 164 | 170 | 161 | 154 | 156 | 151 | 166 | 159 |
| b) after washing | | | | | | | | |
| - 1 time at 90 °C | 159 | 162 | 162 | 142 | 136 | 145 | 121 | 123 |

(continued)

| | | | | | | | | |
|---|---|---|---|---|---|---|---|---|
| Berger Whiteness | | | | | | | | |
| - 3 times at 90 °C | 156 | 157 | 163 | 140 | 132 | 142 | 118 | 113 |
| ΔBW | 8 | 13 | -2 | 14 | 24 | 9 | 48 | 46 |

These data show that application liquids containing only one of CI134, CI163 and CI353 tend to give a brightening effect that is inferior to the brightening effect observed when a combination of CI134 and CI263 is used. Thus, the Berger Whiteness in comparative examples 5, 11, 12 and 14 is in the range of 151-159 and hence lower than the Berger Whiteness observed in examples 11, 16 and 17, which is in the range of 165-173.

Furthermore, as indicated by the Berger Whiteness after washing, the brightening effect does not persist. Even in the case of comparative example 13, where a relatively high Berger Whiteness is observed after treatment (166), the brightening effect deteriorates after a single washing to a value inferior than the corresponding values observations in examples 11, 16 and 17. The most pronounced deterioration of the brightening effect is observed for application liquids containing CI353 (as indicated by the relatively high ΔBW values), although satisfactory values for the Berger Whiteness are observed after treatment and prior to any washing. This means that the treatment does not give a very sustained brightening effect (as indicated by the relatively high ΔBW values), which results in a less attractive appearance of the textile product.

Notably, a strong and sustained brightening effect is observed in example 11, which is indicated by the high value observed for Berger Whiteness (164) after treatment and prior to washing and the low ΔBW value (8) observed even after intense washing. That is, although a mixture of CI134 and CI263, in which CI134 is present in a relatively high amount, is not suitable for being used together with non-iron finishing agents (because the presence of magnesium ions results in the formation of precipitates; cf. example 8), such a mixture is suitable for imparting an attractive appearance to a textile product.

Similarly, a strong and sustained brightening effect is observed in example 17 as indicated by the high value observed for Berger Whiteness (161) after treatment and prior to washing and the low ΔBW value (-1) observed even after intense washing. In fact, the brightening effect slightly increases after washing, which is believed to be the result of the polymeric scaffold formed on and within the cellulose fibers contributes to fixing the optical brightening agents in the fabric.

It is particularly noteworthy that the amount of each optical brightening agent CI134 and CI263 present in the application liquid of examples 11, 16 and 17 is lower than in the application liquid of comparative examples 5, 11 and 12. Yet, a superior (i.e. stronger and more sustained) brightening effect is unexpectedly imparted to a textile product, which indicates a synergistic action of the optical brightening agent CI134 and CI263 present in the composition according to the present invention.

In summary, the data show that the present invention provides a composition comprising optical brightening agents in a high concentration, which composition is suitable for imparting a strong and sustained brightening effect to a textile product and can be used together with softening agents and/or non-iron finishing agents.

## Claims

1. Composition comprising
a compound A of formula (I)

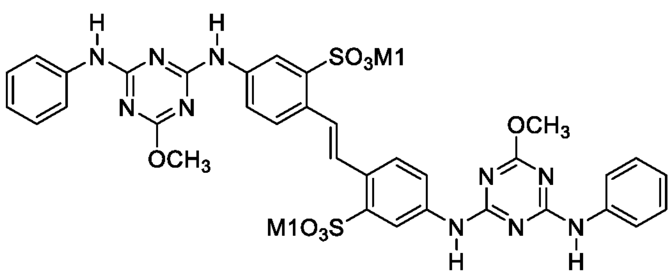

Formula (I)

wherein M1 is independently selected from H, Li, Na, K, $NH_4^+$, $R^a{}_aN^+$, $R^a{}_{(4-m)}NH_m$, in which m is 1, 2, or 3 and Ra is independently selected from alkyl groups having 1-4 carbon atoms and hydroxyethyl groups;
a compound B of formula (II)

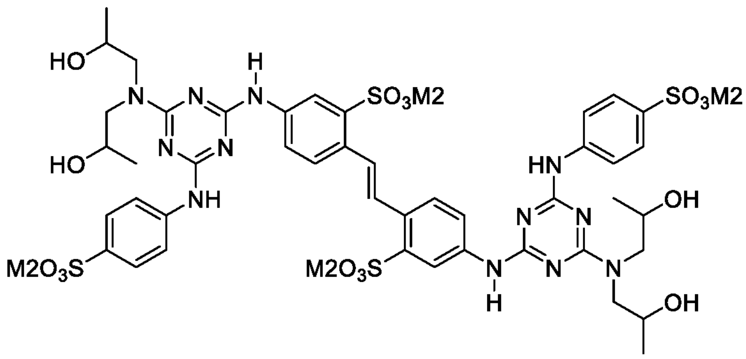

Formula (II)

wherein M2 is independently selected from H, Li, Na, K, $NH_4^+$, $R^a{}_4N^+$, $R^a{}_{(4-m)}NH_m$, in which m is 1, 2, or 3 and Ra is an alkyl group having 1-4 carbon atoms and hydroxyethyl groups;
and water,
wherein
the weight ratio compound A : compound B is in the range of 0.10 to 3.00, and
the total weight of compound A and compound B relative to the total weight of the composition is 0.10 to 50 %.

2. Composition according to claim 1, wherein the weight ratio compound A : compound B is

(a) in the range of 0.20 to 2.50, preferably in the range of 0.25 to 2.20, more preferably in the range of 0.30 to 1.00, still more preferably in the range of 0.30 to 0.80, most preferably in the range of 0.30 to 0.50; or
(b) in the range of 1.01 to 2.50, preferably in the range of 1.50 to 2.30, more preferably in the range of 1.70 to 2.10.

3. Composition according to claim 1 or claim 2, wherein the composition contains alkaline earth metal ions in an amount of less than 1.0 g/l, preferably less than 0.5 g/l, more preferably less than 0.2 g/l.

4. Composition according to any one of claims 1-3, wherein the total weight of compound A and compound B relative to the total weight of the composition is 0.10 to 1.00 %, preferably 0.15 to 0.8 %.

5. Composition according to any one of claims 1-4, wherein the composition contains one or more solubilizing agents in an amount of 0.70-1.50 parts by weight relative to 1.00 part by weight of compound A and compound B, preferably in an amount of 0.80-1.40 parts by weight relative to 1.00 part by weight of compound A and compound B; wherein, preferably, the one or more solubilizing agent is selected from urea, diethylene glycol, diethylene glycol monomethylether, diethylene glycol monoethylether, triethylene glycol, propanediol, ethane diol, glycerol, ε-caprolactam, 2-(dimethylamino)ethanol, diisopropanolamine, monoethanolamine, diethanolamine, triethanolamine and combinations of two or more of these.

6. Composition according to any one of claims 1-5, wherein the composition contains a color-imparting compound, which color-imparting compound preferably imparts a red, blue or violet tint, and more preferably is a dye such as a dye selected from the group consisting of direct violet 9, direct blue 251, direct blue 240, direct violet 66, direct violet 35, direct blue 199, acid violet 48, disperse violet 28 and a combination of these, still more preferably a direct dye, most preferably direct violet 9, direct blue 199 or a combination of these.

7. Composition according to any one of claims 1-6, wherein the pH of the composition is in the range of 3-12, preferably in the range of 4-10, more preferably in the range of 5-8, most preferably in the range of 5-7.

8. Composition according to any one of claims 1-7, wherein each of M1 and M2 in formula (I) and (II), respectively, is independently selected from H, Li, Na, K, $NH_4^+$, preferably from Li, Na, K, $NH_4^+$ , more preferably Na or K.

9. Composition according to any one of claims 1-8, wherein the composition furthermore contains one or more agents selected from a wax, a textile softening agent and a non-iron finishing agent; wherein, preferably, the non-iron finishing agent is dimethylol ethylene urea (DMEU) or dimethylol dihydroxyethylene urea (DMDHEU) and a catalyst that is suitable for reacting these compounds with one or more hydroxyl groups; wherein, more preferably the catalyst is selected from magnesium chloride, magnesium sulfate, titanium oxide, ammonium chloride, ammonium sulfate and a combination of these.

**10.** Method of preparing said composition according to any one of claims 1-9, which method comprises dissolving said compound A, said compound B and any optional compound in water.

**11.** Method of treating a textile product comprising, in the following order, the steps of

(i) impregnating a textile product with said composition according to any one of claims 1-9, wherein said textile product comprises cellulose fibers;
(ii) optionally storing the impregnated textile product for a period of 1-24 hours, preferably 2-20 hours, more preferably 3-18 hours, still more preferably 4-15 hours, most preferably 5-12 hours;
(iii) drying the textile product obtained from step (i) or step (ii), wherein said step (iii) is preferably carried out at a temperature of 60-140 °C, more preferably 90-130 °C; and,
(iv) optionally, heating the textile product to a temperature of 150-200 °C for a period of 10-300 seconds, preferably 160-190 °C for a period of 20-200 seconds, more preferably 160-180 °C for a period of 20-100 seconds, most preferably 160-180 °C for a period of 20-60 seconds.

**12.** Method of treating a textile product according to claim 11, wherein the weight of cellulose fibers relative to the total weight of said textile product is 10 % or higher, preferably 25 % or higher.

**13.** Method of treating a textile product according to claim 11 or claim 12, wherein the textile product is a yarn, a non-woven or a fabric, preferably a woven, knitted, crocheted, tatted or braided fabric.

**14.** Method of treating a textile product according to any one of claims 11-13, wherein the textile product is a yarn or a fabric wound on a roll and the step (i) of impregnating the textile product is preceded by a step (i-1) of unwinding the fabric from said roll; and, preferably,
the step (i) of impregnating said textile product is followed by a step (i-2) of winding the impregnated fabric onto a roll; and, more preferably the step (iii) of drying said textile product is preceded by a step (iii-1) of unwinding the impregnated fabric from said roll.

**15.** Method of treating a textile product according to claim 11 or claim 12, wherein the textile product is a garment, preferably a shirt, a blouse, a pair of trousers, a vest or a jacket.

**16.** Textile product obtainable from the method as defined in any one of claims 11-15.

**17.** Textile product comprising cellulose fibres bearing a compound A of formula (I) and a compound B of formula (II), wherein the weight of cellulose fibers relative to the total weight of said textile product is preferably 10 % or higher, more preferably 25 % or higher, wherein the cellulose fiber preferably is a cotton fiber.

**18.** Textile product as defined in claim 16 or claim 17, wherein the textile product is a yarn or a fabric, preferably a garment, more preferably a shirt, a blouse, a pair of trousers, a vest or a jacket.

## Patentansprüche

**1.** Zusammensetzung umfassen
eine Verbindung A der Formel (I)

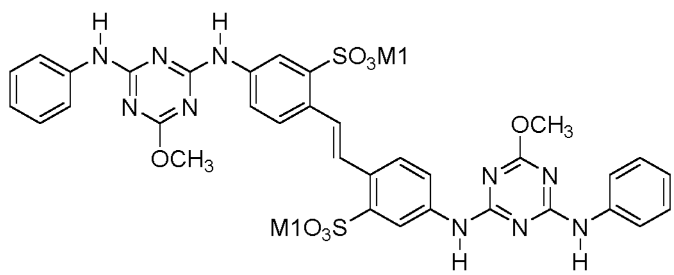

Formel (I)

worin M1 unabhängig ausgewählt ist aus H, Li, Na, K, $NH_4^+$, $R^a_4N^+$, $R^a_{(4-m)}NH_m$, worin m 1, 2 oder 3 ist und Ra unabhängig ausgewählt ist aus Alkylgruppen mit 1-4 Kohlenstoffatomen und Hydroxyethylgruppen;

eine Verbindung B der Formel (II

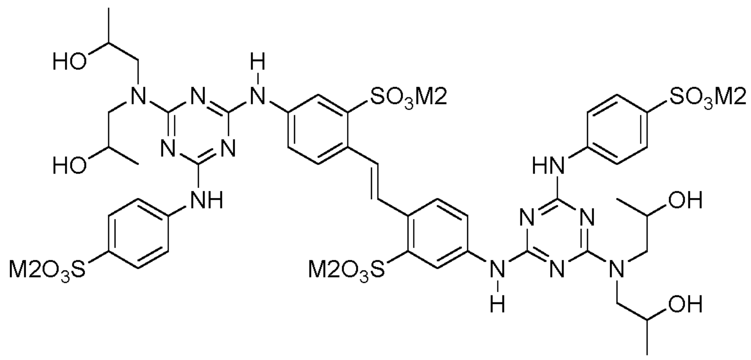

Formel (II)

worin M2 unabhängig ausgewählt ist aus H, Li, Na, K, $NH_4^+$, $R^a{}_aN^+$, $R^a{}_{(4-m)}NH_m$, worin m 1, 2 oder 3 ist und Ra eine Alkylgruppe mit 1-4 Kohlenstoffatomen und Hydroxyethylgruppen ist;
und Wasser,
wobei
das Gewichtsverhältnis Verbindung A : Verbindung B im Bereich von 0,10 bis 3,00 liegt, und
das Gesamtgewicht von Verbindung A und Verbindung B, bezogen auf das Gesamtgewicht der Zusammensetzung, 0,10 bis 50 % beträgt.

**2.** Zusammensetzung nach Anspruch 1, wobei das Gewichtsverhältnis Verbindung A : Verbindung B

(a) im Bereich von 0,20 bis 2,50, vorzugsweise im Bereich von 0,25 bis 2,20, weiter bevorzugt im Bereich von 0,30 bis 1,00, noch weiter bevorzugt im Bereich von 0,30 bis 0,80, am meisten bevorzugt im Bereich von 0,30 bis 0,50 liegt; oder
(b) im Bereich von 1,01 bis 2,50, vorzugsweise im Bereich von 1,50 bis 2,30, weiter bevorzugt im Bereich von 1,70 bis 2,10 liegt.

**3.** Zusammensetzung nach Anspruch 1 oder Anspruch 2, wobei die Zusammensetzung Erdalkalimetallionen in einer Menge von weniger als 1,0 g/l, vorzugsweise weniger als 0,5 g/l, besonders bevorzugt weniger als 0,2 g/l enthält.

**4.** Zusammensetzung nach einem der Ansprüche 1 bis 3, wobei das Gesamtgewicht von Verbindung A und Verbindung B bezogen auf das Gesamtgewicht der Zusammensetzung 0,10 bis 1,00 %, vorzugsweise 0,15 bis 0,8 %, beträgt.

**5.** Zusammensetzung nach einem der Ansprüche 1 bis 4, wobei die Zusammensetzung ein oder mehrere Lösungsvermittler in einer Menge von 0,70 bis 1,50 Gewichtsteilen, bezogen auf 1,00 Gewichtsteil der Verbindung A und Verbindung B, vorzugsweise in einer Menge von 0,80 bis 1,40 Gewichtsteilen, bezogen auf 1.00 Gewichtsteil der Verbindung A und der Verbindung B enthält; wobei der eine oder die mehreren Lösungsvermittler vorzugsweise ausgewählt ist/sind aus Harnstoff, Diethylenglykol, Diethylenglykolmonomethylether, Diethylenglykolmonoethylether, Triethylenglykol, Propandiol, Ethandiol, Glycerin, ε-Caprolactam, 2-(Dimethylamino)ethanol, Diisopropanolamin, Monoethanolamin, Diethanolamin, Triethanolamin und Kombinationen von zwei oder mehreren dieser.

**6.** Zusammensetzung nach einem der Ansprüche 1 bis 5, wobei die Zusammensetzung eine farbgebende Verbindung enthält, welche farbgebende Verbindung vorzugsweise eine rote, blaue oder violette Tönung verleiht und weiter bevorzugt ein Farbstoff ist, wie etwa ein Farbstoff, der aus der Gruppe ausgewählt ist bestehend aus Direktviolett 9, Direktblau 251, Direktblau 240, Direktviolett 66, Direktviolett 35, Direktblau 199, Acid Violet 48, Disperse Violet 28 und einer Kombination dieser, noch bevorzugter ein Direktfarbstoff, am meisten bevorzugt Direktviolett 9, Direktblau 199 oder eine Kombination von diesen.

**7.** Zusammensetzung nach einem der Ansprüche 1 bis 6, wobei der pH-Wert der Zusammensetzung im Bereich von 3 bis 12, vorzugsweise im Bereich von 4 bis 10, weiter bevorzugt im Bereich von 5 bis 8 und am meisten bevorzugt im Bereich von 5 bis 7 liegt.

**8.** Zusammensetzung nach einem der Ansprüche 1-7, wobei M1 und M2 in Formel (I) bzw. (II) jeweils unabhängig

voneinander ausgewählt sind aus H, Li, Na, K, $NH_4^+$, vorzugsweise aus Li, Na, K, $NH_4^+$ , weiter bevorzugt Na oder K.

**9.** Zusammensetzung nach einem der Ansprüche 1 bis 8, wobei die Zusammensetzung ferner ein oder mehrere Mittel enthält, die aus einem Wachs, einem Textilweichmacher und einem eisenfreien Bügelfrei-Ausrüstungsmittel ausgewählt sind; wobei
das eisenfreie Bügelfrei-Ausrüstungsmittel vorzugsweise Dimethylolethylenharnstoff (DMEU) oder Dimethyloldihydroxyethylenharnstoff (DMDHEU) ist und ein Katalysator ist, der für die Reaktion dieser Verbindungen mit einer oder mehreren Hydroxylgruppen geeignet ist; wobei der Katalysator vorzugsweise ausgewählt ist aus Magnesiumchlorid, Magnesiumsulfat, Titanoxid, Ammoniumchlorid, Ammoniumsulfat und einer Kombination dieser Stoffe.

**10.** Verfahren zur Herstellung der Zusammensetzung nach einem der Ansprüche 1 bis 9, wobei das Verfahren das Lösen der Verbindung A, der Verbindung B und einer beliebigen optionalen Verbindung in Wasser umfasst.

**11.** Verfahren zur Behandlung eines Textilprodukts, das in der folgenden Reihenfolge die folgenden Schritte umfasst:

(i) Imprägnieren eines Textilprodukts mit der Zusammensetzung nach einem der Ansprüche 1 bis 9, wobei das Textilprodukt Zellulosefasern umfasst;
(ii) gegebenenfalls Lagern des imprägnierten Textilprodukts für einen Zeitraum von 1-24 Stunden, vorzugsweise 2-20 Stunden, noch bevorzugter 3-18 Stunden, noch bevorzugter 4-15 Stunden, am meisten bevorzugt 5-12 Stunden;
(iii) Trocknen des in Schritt (i) oder Schritt (ii) erhaltenen Textilprodukts, wobei dieser Schritt (iii) vorzugsweise bei einer Temperatur von 60-140 °C, weiter bevorzugt 90 130 °C, durchgeführt wird; und,
(iv) gegebenenfalls Erhitzen des Textilprodukts auf eine Temperatur von 150-200 °C für eine Dauer von 10-300 Sekunden, vorzugsweise 160-190 °C für eine Dauer von 20-200 Sekunden, weiter bevorzugt 160-180 °C für eine Dauer von 20-100 Sekunden, am meisten bevorzugt 160-180 °C für eine Dauer von 20-60 Sekunden.

**12.** Verfahren zur Behandlung eines Textilprodukts nach Anspruch 11, wobei das Gewicht der Zellulosefasern im Verhältnis zum Gesamtgewicht des Textilprodukts 10 % oder mehr, vorzugsweise 25 % oder mehr beträgt.

**13.** Verfahren zur Behandlung eines Textilprodukts nach Anspruch 11 oder 12, wobei das Textilprodukts ein Garn, ein Vlies oder ein Stoff, vorzugsweise ein gewebter, gestrickter, gehäkelter, geklöppelter oder geflochtener Stoff ist.

**14.** Verfahren zur Behandlung eines Textilprodukts nach einem der Ansprüche 11 bis 13, wobei das Textilprodukts ein Garn oder Stoff ist, das/der auf eine Rolle aufgewickelt ist, und dem Schritt (i) des Imprägnierens des Textilprodukts ein Schritt (i-1) des Abwickelns des Stoffs von der Rolle vorausgeht; und
dem Schritt (i) des Imprägnierens des Textilprodukts vorzugsweise ein Schritt (i-2) des Aufwickelns des imprägnierten Stoffs auf eine Rolle folgt; und dem Schritt (iii) des Trocknens des Textilprodukts vorzugsweise ein Schritt (iii-1) des Abwickelns des imprägnierten Stoffs von der Rolle vorausgeht.

**15.** Verfahren zur Behandlung eines Textilprodukts nach Anspruch 11 oder Anspruch 12, wobei das Textilprodukts ein Kleidungsstück, vorzugsweise ein Hemd, eine Bluse, eine Hose, eine Weste oder eine Jacke ist.

**16.** Textilprodukt erhältlich nach dem Verfahren gemäß einem der Ansprüche 11-15.

**17.** Textilprodukt umfassend Zellulosefasern, die eine Verbindung A der Formel (I) und eine Verbindung B der Formel (II) tragen, wobei das Gewicht der Zellulosefasern im Verhältnis zum Gesamtgewicht des Textilprodukts vorzugsweise 10 % oder mehr, weiter bevorzugt 25 % oder mehr beträgt, wobei die Zellulosefaser vorzugsweise eine Baumwollfaser ist.

**18.** Textilprodukt nach Anspruch 16 oder 17, wobei das Textilprodukt ein Garn oder ein Stoff, vorzugsweise ein Kleidungsstück, weiter bevorzugt ein Hemd, eine Bluse, eine Hose, eine Weste oder eine Jacke ist.

## Revendications

**1.** Composition comprenant
un composé A selon la formule (I)

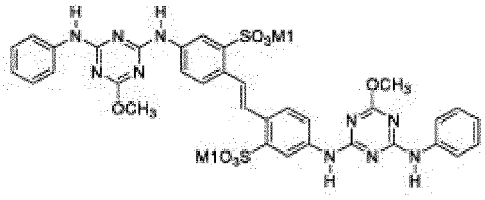

Formule (I)

où M1 est choisi de manière indépendante parmi H, Li, Na, K, $NH_4^+$, $R^a{}_aN^+$, $R^a{}_{(4-m)}NH_m$, dans lesquels m est égal à 1, 2 ou 3 et Ra est choisi de manière indépendante parmi des groupements alkyles ayant 1 à 4 atomes de carbone et des groupements hydroxy éthyles ;
un composé B selon la formule (II)

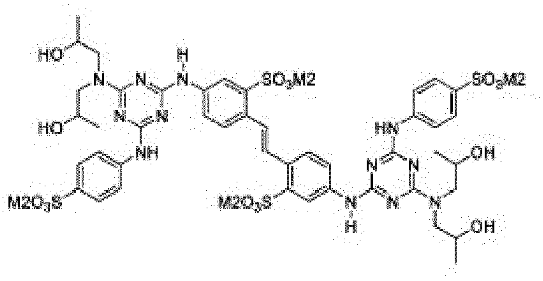

Formule (II)

où M2 est choisi de manière indépendante parmi H, Li, Na, K, $NH_4^+$, $R^a{}_4N^+$, $R^a{}_{(4-m)}NH_m$, dans lesquels m est égal à 1, 2 ou 3 et Ra est un groupement alkyle ayant 1 à 4 atomes de carbone et des groupements hydroxy éthyles
et de l'eau,
dans laquelle
le ratio en poids du composé A : le composé B est dans la plage de 0,10 à 3,00, et le poids total du composé A et du composé B par rapport au poids total de la composition est de 0,10 à 50 %.

**2.** Composition selon la revendication 1, dans laquelle le ratio en poids de composé A : composé B est

(a) dans la plage de 0,20 à 2,50, de préférence dans la plage de 0,25 à 2,20, plus préférentiellement dans la plage de 0,30 à 1,00, plus préférentiellement encore dans la plage de 0,30 à 0,80, idéalement dans la plage de 0,30 à 0,50 ; ou
(b) dans la plage de 1,01 à 2,50, de préférence dans la plage de 1,50 à 2,30, plus préférentiellement dans la plage de 1,70 à 2,10.

**3.** Composition selon la revendication 1 ou la revendication 2, la composition contenant des ions de métaux alcalino-terreux dans une teneur inférieure à 1,0 g/l, de préférence inférieure à 0,5 g/l, plus préférentiellement inférieure à 0,2 g/l.

**4.** Composition selon l'une quelconque des revendications 1 à 3, dans laquelle le poids total de composé A et de composé B par rapport au poids total de la composition est de 0,10 à 1,00 %, de préférence de 0,15 à 0,8 %.

**5.** Composition selon l'une quelconque des revendications 1 à 4, la composition contenant un ou plusieurs agents de solubilisation dans une teneur de 0,70 à 1,50 parties en poids par rapport à 1,00 partie en poids de composé A et de composé B, de préférence dans une teneur de 0,80 à 1,40 parties en poids par rapport à 1,00 partie en poids de composé A et de composé B ; dans laquelle, de préférence, le ou les agents de solubilisation sont choisis parmi l'urée, le diéthylène glycol, le diéthylène glycol mono méthyl éther, la diéthylène glycol mono éthyl éther, le tri éthylène glycol, le propane diol, l'éthane diol, le glycérol, le ε-caprolactame, le 2-(diméthyl amino) éthanol, la diisopropanol amine, la mono éthanol amine, la diéthanol amine, la triéthanol amine et des combinaisons de deux ou plusieurs d'entre eux.

**6.** Composition selon l'une quelconque des revendications 1 à 5, la composition contenant un composé apportant une coloration, lequel composé apportant une coloration transmet de préférence une teinte rouge, bleue ou violette, et plus préférentiellement est un colorant tel qu'un colorant choisi dans le groupe constitué du violet 9 direct, du bleu 251

direct, du bleu 240 direct, du violet 66 direct, du violet 35 direct, du bleu 199 direct, du violet 48 acide, du violet 28 dispersé et une combinaison de ceux-ci, plus préférentiellement encore un colorant direct, idéalement du violet 9 direct, du bleu 199 direct ou une combinaison de ceux-ci.

**7.** Composition selon l'une quelconque des revendications 1 à 6, dans laquelle le pH de la composition se situe dans la plage de 3 à 12, de préférence dans la plage de 4 à 10, plus préférentiellement dans la plage de 5 à 8, idéalement dans la plage de 5 à 7.

**8.** Composition selon l'une quelconque des revendications 1 à 7, dans laquelle chaque M1 et M2 dans les formules (I) et (II), respectivement, est choisi de manière indépendante parmi H, Li, Na, K, $NH_4^+$, de préférence parmi Li, Na, K, $NH_4^+$, plus préférentiellement Na ou K.

**9.** Composition selon l'une quelconque des revendications 1 à 8, la composition contenant en outre un ou plusieurs agents choisis parmi une cire, un agent adoucissant de textile et un agent de finition de non repassage ; dans laquelle, de préférence, l'agent de finition de non repassage est la diméthylol éthylène urée (DMEU) ou la diméthylol dihydroxy éthylène urée (DMDHEU), et un catalyseur qui est approprié pour faire réagir ces composés avec un ou plusieurs groupements hydroxyles ; dans laquelle, plus préférentiellement le catalyseur est choisi parmi le chlorure de magnésium, le sulfate de magnésium, l'oxyde de titane, le chlorure d'ammonium, le sulfate d'ammonium et une combinaison de ceux-ci.

**10.** Procédé de préparation de ladite composition selon l'une quelconque des revendications 1 à 9, lequel procédé comprend la dissolution dudit composé A, dudit composé B et d'un composé éventuel quelconque dans de l'eau.

**11.** Procédé de traitement d'un produit textile comprenant, dans l'ordre suivant, les étapes

(i) d'imprégnation d'un produit textile avec ladite composition selon l'une quelconque des revendications 1 à 9, dans lequel ledit produit textile comprend des fibres de cellulose ;
(ii) éventuellement, de stockage du produit textile pendant une durée de 1 à 24 heures, de préférence de 2 à 20 heures, plus préférentiellement de 3 à 18 heures, plus préférentiellement encore de 4 à 15 heures, idéalement de 5 à 12 heures ;
(iii) de séchage du produit textile obtenu dans l'étape (i) ou l'étape (ii), dans lequel ladite étape (iii) est de préférence effectuée à une température de 60 à 140 °C, plus préférentiellement de 90 à 130 °C ; et
(iv) éventuellement, de chauffage du produit textile à une température de 150 à 200 °C pendant une durée de 10 à 300 secondes, de préférence à 160 à 190 °C pendant une durée de 20 à 200 secondes, plus préférentiellement à 160 à180 °C pendant une durée de 20 à 100 secondes, idéalement à 160 à 180 °C pendant une durée de 20 à 60 secondes.

**12.** Procédé de traitement d'un produit textile selon la revendication 11, dans lequel le poids de fibres de cellulose par rapport au poids total dudit produit textile est égal ou supérieur à 10 %, de préférence égal ou supérieur à 25 %.

**13.** Procédé de traitement d'un produit textile selon la revendication 11 ou la revendication 12, dans lequel le produit textile est un fil, un non tissé ou un tissu, de préférence un tissu tissé, tricoté, crocheté, tatoué ou tressé.

**14.** Procédé de traitement d'un produit textile selon l'une quelconque des revendications 11 à 13, dans lequel le produit textile est un fil ou un tissu enroulé sur un rouleau et l'étape (i) d'imprégnation du produit textile est précédée par une étape (i-1) de déroulage du tissu dudit rouleau ; et, de préférence,
l'étape (i) d'imprégnation dudit produit textile est suivie par une étape (i-2) d'enroulage du tissu imprégné sur un rouleau ; et, plus préférentiellement l'étape (iii) de séchage dudit produit textile est précédée par une étape (iii-1) de déroulage du tissu imprégné dudit rouleau.

**15.** Procédé de traitement d'un produit textile selon la revendication 11 ou la revendication 12, dans lequel le produit textile est un vêtement, de préférence une chemise, une blouse, un pantalon, une veste ou un blouson.

**16.** Produit textile pouvant être obtenu par le procédé selon l'une quelconque des revendications 11 à 15.

**17.** Produit textile comprenant des fibres de cellulose portant un composé A selon la formule (I) et un composé B selon la formule (II), dans lequel le poids de fibres de cellulose par rapport au poids total dudit produit textile est de préférence égal ou supérieur à 10 %, plus préférentiellement égal ou supérieur à 25 %, dans lequel la fibre de cellulose est de

préférence une fibre de coton.

**18.** Produit textile selon la revendication 16 ou la revendication 17, le produit textile étant un fil ou un tissu, de préférence un vêtement, plus préférentiellement une chemise, une blouse, un pantalon, une veste ou un blouson.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0032483 A2
- EP 0323399 A1

### Non-patent literature cited in the description


- *CHEMICAL ABSTRACTS*, 3426-43-5
- **C. K. POON et al.** *Cellulose Chem. Technol.*, 2016, vol. 50 (7-8), 889-894
- **Y. HASSEN et al.** *J. Textile Sci. & Fashion Tec.*, 2021, vol. 9 (3)
- *CHEMICAL ABSTRACTS*, 67786-25-8
- *CHEMICAL ABSTRACTS*, 52301-70-9